(19) Europäisches Patentamt
European Patent Office
Office européen des brevets

(11) Veröffentlichungsnummer: **0 214 407**
**A2**

(12) # EUROPÄISCHE PATENTANMELDUNG

(21) Anmeldenummer: 86109646.9

(22) Anmeldetag: 14.07.86

(51) Int. Cl.⁴: B 01 D 53/14
B 01 D 53/34

(30) Priorität: 15.07.85 DE 3525241
19.07.85 DE 3525871

(43) Veröffentlichungstag der Anmeldung:
18.03.87 Patentblatt 87/12

(84) Benannte Vertragsstaaten:
AT BE DE FR GB IT NL SE

(71) Anmelder: Peter, Siegfried, Prof. Dr.
Lindenweg 3
D-8525 Uttenreuth-Weiher(DE)

(72) Erfinder: Peter, Siegfried, Prof. Dr.
Lindenweg 3
D-8525 Uttenreuth-Weihe(DE)

(72) Erfinder: Härtel, Georg, Dr.
Westtorgraben 9
D-8500 Nürnberg 80(DE)

(74) Vertreter: Kraus, Walter, Dr.
Patentanwälte Kraus, Weisert & Partner
Thomas-Wimmer-Ring 15
D-8000 München 22(DE)

(54) **Verfahren zur Entfernung von organischen Schwefelverbindungen oder/und Schwefeloxiden oder/und Stickoxiden aus solchen enthaltenden Gasen.**

(57) Es wird ein Verfahren zur Entfernung von Kohlenoxisulfid, Schwefelkohlenstoff und Mercaptan, gegebenenfalls neben Schwefelwasserstoff, sowie ein Verfahren zur Entfernung von Schwefeloxiden und/oder Stickoxiden aus diese Verbindungen enthaltenden Gasen in einem Verfahrensschritt durch Waschen der zu reinigenden Gase bei normalem oder erhöhtem Druck und Temperaturen zwischen 20 und 200°C mit einer Lösung beschrieben. Das erfindungsgemäße Verfahren ist dadurch gekennzeichnet, daß eine Lösung von Salzen des Scandiums, des Yttriums, der Lanthanide, der Actinide oder ihrer Gemische in Wasser und/oder in organischen Lösungsmitteln verwendet wird. Es wird weiterhin ein Verfahren zur Entfernung von Schwefel- und/oder Stickoxiden mit reduzierenden Verbindungen aus sie enthaltenden Gasen bei erhöhter Temperatur in Anwesenheit von Katalysatoren beschrieben, das dadurch gekennzeichnet ist, daß als Katalysatoren Katalysatoren verwendet werden, die Verbindungen des Scandiums, des Yttriums, der Elemente der Lanthanidenreihe, der Elemente der Actinidenreihe und ihre Gemische enthalten und daß die Reaktion bei einer Temperatur im Bereich von 114 bis 150°C durchgeführt wird.

EP 0 214 407 A2

Verfahren zur Entfernung von organischen Schwefelverbindungen oder/und Schwefeloxiden oder/und Stickoxiden aus solchen enthaltenden Gasen

Die Erfindung betrifft ein Verfahren zur Entfernung von organischen Schwefelverbindungen oder/und Schwefeloxiden oder/und Stickoxiden aus sie enthaltenden Gasen.

Die Erfindung betrifft gemäß einer ersten Ausführungsform ein Verfahren zur Entfernung von organischen Schwefelverbindungen, wie beispielsweise Kohlenoxisulfid, Schwefelkohlenstoff und Mercaptanen, gegebenenfalls neben Schwefelwasserstoff, aus diese Verbindungen enthaltenden Gasen in einem Verfahrensschritt durch Waschen der zu reinigenden Gase bei normalem oder erhöhtem Druck und Temperaturen zwischen 20 und 200°C mit einer Lösung. Das Verfahren gemäß der ersten Variante ist dabei auf beliebige Gase, die die genannten Verbindungen als Verunreinigungen aufweisen, anwendbar. Beispiele für solche Gase sind Naturgas, Kokereigas, Wassergas, Generatorgas, Gase, die aus Kohlevergasungsanlagen stammen, und Abgase.

Die Erfindung betrifft weiterhin ein Verfahren zur Entfernung von Schwefeloxiden ($SO_x$) und/oder Stickoxiden ($NO_x$) aus diese Verbindungen enthaltenden Gasen mit Hilfe von reduzierenden Verbindungen in einem Verfahrensschritt gemäß einer zweiten Ausführungsform durch Waschen der zu reinigenden Gase bei normalem oder erhöhtem Druck und Temperaturen zwischen 20 und 200°C mit einer Lösung oder gemäß einer dritten Ausführungsform durch Behandlung der Gase bei erhöhter Temperatur mit einem Katalysator.

Beispiele für Gase, welche Schwefeloxide und/oder Stickoxide enthalten, sind Rauchgase, Abgase der Schwefelsäure- oder Salpetersäureerzeugung, Röstgase usw.

Eine Vielzahl technischer Gasgemische enthält als Schadgaskomponenten Kohlenstoff-Schwefel-Verbindungen und/oder Schwefel- und Stickoxide. Diese Schadgase müssen, da sie gegebenenfalls als Katalysatorgifte wirken, oder auch aus Gründen der Luftreinhaltung abgeschieden werden. Hierzu werden die Gasgemische zum Beispiel zwecks Umwandlung der Organoschwefelverbindungen Kohlenoxisulfid (COS) oder Schwefelkohlenstoff ($CS_2$) in Schwefelwasserstoff ($H_2S$), der sich aus Gasgemischen einfacher auswaschen läßt, bei erhöhten Temperaturen mit Wasserdampf behandelt. Schwefelwasserstoff wird u.a. durch Schwefeldioxid ($SO_2$) zu elementarem Schwefel oxidiert, Schwefeloxide ($SO_2$, $SO_3$) durch Wasserstoff oder Schwefelwasserstoff zu Elementarschwefel reduziert. Schließlich wird für die Entfernung von Stickoxiden ($NO_x$) deren Reduktion zu Stickstoff mit Hilfe von Ammoniak vorgeschlagen.

Es läßt sich aufgrund thermodynamischer Überlegungen zeigen, daß die Hydrolyse von $CS_2$ und COS mit abnehmender Temperatur zugunsten der Hydrolyseprodukte verschoben wird. Zur Erhöhung der bei niedrigen Temperaturen kleinen Reaktionsgeschwindigkeiten sind bereits eine Reihe von Katalysatoren, zum Beispiel Oxide des Aluminiums und Eisens, Legierungen von Chrom und Aluminium oder solche von Kupfer, Chrom und Aluminium bekannt geworden. Die Umwandlung der Organoschwefelverbindungen COS und $CS_2$ in $H_2S$ ist damit bei Temperaturen von 100 bis 200°C zu etwa 90% möglich.

In einem Aufsatz von D. Bienstock, J.H. Field und J.G. Myers, U.S. Bureau of Mines Report of Investigations 7021, Washington, D.C. (1967), wird ein Verfahren beschrieben, mit welchem Schwefeldioxid mit Wasserstoff zu Schwefelwasserstoff und Wasser mittels eines alkalisierten Aluminiumoxidkontakts überführt wird. Für eine weitere katalytische Umsetzung nach dem Claus-Prozeß

$$2\ H_2S + SO_2 \longrightarrow 3/2\ S_2 + 2\ H_2O$$

werden in der zugänglichen Literatur als wirksame Katalysatoren u.a. Aktivkohle (G. Guyot, J.E. Martin, Paper at CNGPA-Meeting, Edmonton, Alta, 11. Juni 1971), Molekularsiebe oder Zeolithe (F.K. Beach, Canadian Oil and Gas Industries, Juli 1962, Seite 41) sowie Kontakte auf Aluminiumoxid-, Kobaltoxid- und Molybdänoxidbasis (M.J. Pearson, Hydrocarbon Processing, Februar 1973, Seite 81 bis 85) genannt. Bei Temperaturen zwischen 400 und 200°C werden Umsatzgrade, bezogen auf $H_2S$, zwischen 30 bis 95% erreicht. In dem Artikel von O. Rentz, R. Hempelmann in "Staub-Reinhaltung der Luft", 40 (1980), 7, Seite 299 bis 304, wird angegeben, daß $NO_x$ mit $NH_3$ gemäß der Gleichung

$$6\ NO + 4\ NH_3 \longrightarrow 5\ N_2 + 6\ H_2O$$

an Kontaktmassen u.a. auf Titanoxid-, Kupferoxid- und Siliciumoxidbasis mit Abscheidegraden von ca. 90%, bezogen auf $NO_x$, bei Temperaturen von 350 bis 450°C umgesetzt werden kann. Es ist somit bekannt, daß man Organoschwefelverbindungen durch Hydrolyse in Schwefelwasserstoff überführen kann. Ferner ist bekannt, daß Schwefelwasserstoff, Schwefel- bzw. Stickoxide durch Redoxprozesse in Elementarschwefel bzw. elementaren Stickstoff überführt werden können. Die Umwandlungsgrade betragen aber im allgemeinen lediglich 90%, und es werden speziell bei den Redoxprozessen hohe Temperaturen von 300 bis 450°C benötigt.

Eine weitere Möglichkeit zur Entfernung von Schwefeloxiden aus Gasen besteht darin, sie an Alkalien oder Erdalkalien zu binden. Dabei entstehen im allgemeinen feste Produkte, die wie beispielsweise Gips auf Deponien gelagert werden müssen. Die in Rauchgasen vorkommenden Schwefeloxide können auch zu Ammoniumsulfat verarbeitet werden. Produkte wie Ammoniumsulfat sind aber nur begrenzt als Düngemittel absetzbar. Daher ist die Verarbeitung der gesamten in Rauchgasen vorkommenden Schwefeloxide zu Ammoniumsulfat unrealistisch. Der Vorschlag, bei der Entschwefelung von Rauchgasen Schwefelsäure zu erzeugen, erscheint ebenfalls in großem Maßstab nicht praktikabel, weil die Schwefelsäure als Koppelprodukt der Energieerzeugung unabhängig vom Schwefelsäuremarkt erzeugt werden muß und Schwefelsäure in großen Mengen nur mit hohem Aufwand gelagert werden kann. Wegen der in den Calciumsulfat/-sulfit-Schlämmen vorhandenen Begleitstoffe wie Chloride, Fluoride usw. ist bei der Lagerung langfristig mit problematischen Sickerwässern zu rechnen,deren Aufbereitung entsprechende Kosten verursacht.

Es ist weiterhin bekannt, daß man organisch gebundenen Schwefel aus Gasen entfernen kann, indem man diese mit alkalischen Medien, zum Beispiel wäßrigen Lösungen der Carbonate, Bicarbonate, Borate und Phosphate von Alkalimetallen, oder mit Lösungen organischer Alkyl-, Aryl- und Alkanolamine behandelt. Das in den Gasen enthaltene $CO_2$ wird jedoch ebenfalls absorbiert und bedingt zusätzliche Kosten.

Die Entfernung von Kohlenoxisulfid (COS) und Schwefelkohlenstoff ($CS_2$) durch die gegenwärtig angewandten Waschprozesse zur Entfernung der sauren Schadgaskomponenten $H_2S$ und $CO_2$ ist ungenügend. Deshalb sind auch bereits zahlreiche Vorschläge zur Lösung des anstehenden Problems veröffentlicht worden.

Von den bekannten Verfahren zur Entfernung des organisch gebundenen Schwefels ist die heterogen katalytische Umwandlung zu Schwefelwasserstoff bis jetzt die erfolgreichste Arbeitsweise. Man benutzt hierbei Katalysatoren, die Schwermetalle, wie Eisen, Blei, Molybdän, Nickel und Wolfram, vorzugsweise deren Sulfide, enthalten. Ferner werden CO-Konvertierungskatalysatoren, auch in modifizierter Form, eingesetzt. Ein Nachteil, der all diesen heterogen katalytischen Verfahrensvarianten gemeinsam ist, ist, daß man hohe Temperaturen von 300 bis 600°C anwenden muß.

So wurde vorgeschlagen, die Gase bei so hohen Temperaturen mit in Wasser oder Alkoholen gelösten basisch reagierenden Salzen anorganischer oder organischer Basen zu behandeln, daß die Schadgaskomponenten COS und $CS_2$ durch Hydrolyse in Schwefelwasserstoff überführt werden, der zusammen mit dem Gas aus der Reaktionszone abgeführt werden kann. Das Problem hierbei ist, die notwendige Basizität des Reinigungsmittels trotz der Gegenwart von $H_2S$ und $CO_2$ aufrechtzuerhalten. Letztere reagieren zu Sulfiden und Carbonaten bzw. zu Bisulfiden und Bicarbonaten und bewirken dadurch eine Abnahme der Basizität. Der vorhandene und der katalytisch gebildete Schwefelwasserstoff muß in einem weiteren Arbeitsgang aus dem Gas entfernt werden.

Es sind weiterhin eine Reihe von Verfahren zur Entfernung von Schwefeloxiden und/oder Stickoxiden aus Rauchgasströmen bekannt, wie katalytische und nichtkatalytische Oxidation der Schadgaskomponenten $SO_2$ und $NO_x$ durch Sauer-

stoff, Ozon etc., die katalytische und nichtkatalytische Reduktion der Schadgaskomponenten $SO_2$ und $NO_x$ durch Ammoniak und schließlich die Naßabsorption der sauren Schadgaskomponenten $SO_x$ und $NO_x$ durch wäßrige Lösungen oder Suspensionen. Da bei Temperaturschwankungen und nichtstöchiometrischer Zusammensetzung von Redoxsystemen Schwierigkeiten auftreten, wie zum Beispiel die Emission eines der Reaktionsteilnehmer, ist man dazu übergegangen, Katalysatoren als Reaktionshilfen einzusetzen, welche in einem optimalen Temperaturbereich von 350 bis 450°C arbeiten. Allgemein ergeben bei der Verbrennung feuerungstechnische Maßnahmen nur eine geringe Absenkung der $NO_x$-Emissionswerte. Sie beeinhalten auch eine schwer zu realisierende Feuerungsumstellung, was vor allem bei der Umrüstung von Altanlagen zu hohen Kosten führen kann.

Die Entfernung von $SO_2$ und $NO_x$ durch Redoxreaktionen wird in Japan bereits eingesetzt. Sie haben den prinzipiellen Nachteil, daß sie in großen Mengen wertvolle Produktstoffe, wie zum Beispiel Wasserstoffperoxid als Oxidationsmittel oder Ammoniak als Reduktionsmittel, verbrauchen. Darüber hinaus besteht für die katalytische Reduktion, vor allem beim Einsatz hinter kohlegefeuerten Kesseln, die Gefahr, daß die Katalysatoren durch Staubverschmutzungen unwirksam werden. Dagegen besitzt die Naßabscheidung den Vorteil, daß neben der Beseitigung von Stickoxiden und Schwefeldioxid die gleichzeitige Niederschlagung von Staub möglich ist.

Der vorliegenden Erfindung liegt die Aufgabe zugrunde, ein einfaches Verfahren zur Entfernung von organischen Schwefelverbindungen, gegebenenfalls neben Schwefelwasserstoff, und ein Verfahren zur Entfernung von Schwefeloxiden und Stickoxiden aus solche enthaltenden Gasen zur Verfügung zu stellen. Es sollen die verfahrenstechnischen Vorteile einer Rauchgaswäsche erhalten bleiben, ohne daß eine

Wiederaufheizung des gereinigten Gasstromes notwendig wird. Bei dem erfindungsgemäßen Verfahren sollen Chemikalien eingesetzt werden, welche leicht verfügbar und regenerierbar sind. Es sollen unschädliche Produkte entstehen, welche leicht beseitigt werden können. Das Verfahren soll auf wirtschaftliche Weise ablaufen. Erfindungsgemäß sollen die im Rauchgas vorhandenen Schwefeloxide zu elementarem Schwefel umgesetzt werden, der problemlos gelagert, transportiert und weiterverarbeitet werden kann.

Das erfindungsgemäße Verfahren gemäß der ersten Variante zur Entfernung von Kohlenoxidsulfid, Schwefelkohlenstoff, Mercaptanen und gegebenenfalls Schwefelwasserstoff aus diese Verbindungen enthaltenden Gasen in einem Verfahrensschritt durch Waschen der zu reinigenden Gase ist dadurch gekennzeichnet, daß eine Lösung von Salzen des Scandiums, des Yttriums, der Lanthanide, der Actinide oder ihrer Gemische in Wasser und/oder organischen Lösungsmitteln verwendet wird.

Das erfindungsgemäße Verfahren gemäß der zweiten Variante zur Entfernung von Schwefeloxiden und/oder Stickoxiden aus diese Verbindungen enthaltenden Gasen mit Hilfe von reduzierenden Verbindungen in einem Verfahrensschritt durch Waschen der zu reinigenden Gase ist ebenfalls dadurch gekennzeichnet, daß eine Lösung von Salzen des Scandiums, des Yttriums, der Lanthanide, der Actinide oder ihrer Gemische in Wasser und/oder organischen Lösungsmitteln verwendet wird.

Beispiele für Elemente der Lanthanidenreihe sind La, Ce, Pr, Nd, Pm, Sm, Eu, Gd, Tb, Dy, Ho, Er, Tm, Yb und Lu. Beispiele für Elemente der Actinidenreihe sind Ac, Th, Pa, U. Als Salze der genannten Elemente können alle solchen Salze verwendet werden, die in den verwendeten organischen Lösungsmitteln und ihren Gemischen mit Wasser löslich sind. Beispiele hierfür sind Chloride, Sulfate, Bromide, Nitrate etc. Überraschenderweise zeigte sich, daß als Salze die Alkandionate der folgenden Strukturformel besonders geeignet sind:

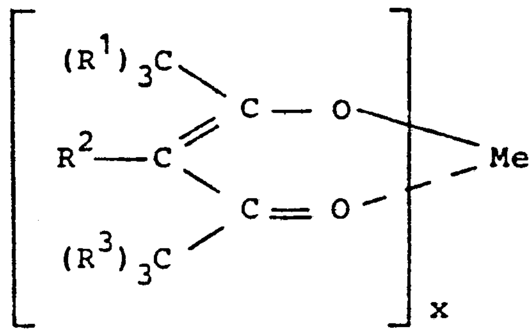

In dieser Formel bedeuten

Me Scandium, Yttrium, ein Element der Lanthanidenreihe oder der Actinidenreihe, vorzugsweise La, Ce, Pr, Yb, Th,

x 3 oder 4,

$R^1$, $R^2$ und $R^3$, die gleich oder verschieden sein können, ein Wasserstoffatom, eine Alkyl-, eine Alkenyl- oder eine Arylgruppe, wobei diese Gruppen auch durch ein oder mehrere Halogenatome substituiert sein können.

Die Alkylgruppe kann geradkettig oder verzweigtkettig sein und enthält 1 bis 10, vorzugsweise 1 bis 5, besonders bevorzugt 1 bis 3, Kohlenstoffatome. Beispiele hierfür sind Chelate des Acetylacetons, Formylacetons.

Die Alkenylgruppe enthält 2 bis 10 Kohlenstoffatome; Beispiele hierfür sind Chelate des 1-Propen-1,3-butandions, 1-Buten-1,3-butandions.

Die Arylgruppe ist bevorzugt ein Phenylrest. Beispiele hierfür sind Chelate des Benzoylacetons, Dibenzoylacetons.

Die Gruppen können auch durch Halogenatome, wie Chlor oder Fluor, substituiert sein, z.B. zu 1,1,1,2,2,3,3-Heptafluoriden.

Die Chelatkomplexe können als solche dem Waschmedium zugesetzt werden, zum Beispiel Lanthan(III)-2,2,6,6-tetramethyl-3,5-heptandionat (La(thd)$_3$), Praseodym(III)-2,2,6,6-tetramethyl-3,5-heptandionat (Pr(thd)$_3$), Ytterbium(III)-7,7-dimethyl-1,1,1,2,2,3,3-heptafluor-4,6-octandionat (Yb(fod)$_3$) oder ihre Gemische. Geeignete Komplexe können auch während des Waschprozesses im Medium gebildet werden, so u.a. durch Einwirkung von Alkandionen, zum Beispiel Pentan-2,4-dion ($CH_3COCH_2COCH_3$) 1-Phenyl-1,3-butandion ($C_6H_5COCH_2COCH_3$), auf lösliche Salze der Lanthanide und Actinide, zum Beispiel auf $LaCl_3$, $La(NO_3)_3 \cdot 6H_2O$, $La_2(SO_4)_3$, $Ce(NO_3)_3 \cdot 6H_2O$, $Th(NO_3)_4 \cdot 6H_2O$, $Th(C_2O_4)_2 \cdot 6H_2O$ etc.

Die Wirksamkeit der erfindungsgemäß verwendeten chelatkomplexhaltigen Waschmedien kann dadurch gesteigert werden, daß man ihnen Salze der Alkalimetalle, vorzugsweise Carbonate oder Thiocarbonate, zusetzt. Beispiele für Alkalimetalle sind Lithium, Kalium und Natrium. Bei den Salzen der Thiocarbonsäure handelt es sich vorzugsweise um Salze der Dithiokohlensäure, zum Beispiel um Kalium-O-ethyldithiocarbonat ($C_3H_5KOS_2$).

Bei der ersten und zweiten Variante des erfindungsgemäßen Verfahrens werden als Lösungsmittel organische Lösungsmittel, die gegebenenfalls Wasser enthalten, verwendet. Die Konzentration an Wasser hängt von der Löslichkeit des Wassers in dem hochsiedenden organischen Lösungsmittel ab, und zumindest muß die Menge an Wasser vorhanden sein, welche für die Hydrolyse benötigt wird. Die Lösungen können 0,1 bis 98 Gew.-% Wasser, bezogen auf das Gemisch aus Wasser und organischem Lösungsmittel, enthalten. Bevorzugt enthalten sie 1 bis 5 Gew.-% Wasser bei Normaldruck und 5 bis 15 Gew.-% bei Verfahrensführung unter erhöhtem Druck. Die Lösungen zur ersten Variante können auch rein wäßriger Natur sein.

Beispiele für organische Lösungsmittel sind hochsiedende organische Lösungsmittel, wie Glykole, Polyglykole, Polyglykolalkylether, Polyglykolarylether, Phosphorsäureester, Ester von Dicarbonsäuren, wie Phthalsäurediester, Adipinsäurediester, Alkanolamine oder Alkylalkanolamine oder deren Gemische. Als organische Lösungsmittel werden Polyglykole und Polyglykolether bevorzugt.

Die Salze des Scandiums, des Yttriums, der Lanthanide, der Actinide oder ihrer Gemische, vorzugsweise ihre Chelatkomplexe,können bis zur Sättigungsgrenze dem Waschwasser oder den als Waschmedien dienenden organischen Flüssigkeiten zugesetzt werden. Vorzugsweise arbeitet man aber mit verdünnten Lösungen mit Konzentrationen zwischen 0,1 und 5 Gew.-%, bezogen auf die Waschlösung. Die Salze der Alkalimetalle können ebenfalls bis zur Sättigungsgrenze verwendet werden. Bevorzugt werden sie in einer Menge von 0,1 bis 5 Gew.-% Alkalimetallsalz, bezogen auf die Waschlösung, eingesetzt.

Gemäß einer besonders bevorzugten Ausführungsform werden 0,1- bis 5gew.%ige Lösungen der Lanthanid- und/oder Actinidkomplexe und/oder Komplexe des Scandiums und Yttriums und/oder 0,1- bis 5gew.%ige Lösungen der Alkalicarbonate oder Alkalithiocarbonate verwendet. Bei dieser bevorzugten Ausführungsform wird als Lösungsmittel Wasser und Gemische aus Wasser und Polyglykolethern verwendet.

Bei der ersten und zweiten Variante des erfindungsgemäßen Verfahrens arbeitet man bei Temperaturen zwischen 20 und 200°C, vorzugsweise zwischen 80 und 130°C. Es war überraschend und hat nicht nahegelegen, daß die Entfernung der genannten Gase gemäß der ersten und zweiten Variante der vorliegenden Erfindung auch bei Raumtemperatur erfolgen kann.

Bei der ersten und zweiten Variante des erfindungsgemäßen Verfahrens kann man bei Normaldruck oder erhöhtem Druck arbeiten. Der Druck kann im Bereich von 1 bis 200 bar liegen; vorzugsweise arbeitet man bei einem Druck von 1 bis 70 bar.

Die bei der ersten und zweiten Variante des erfindungsgemäßen Verfahrens anfallenden Waschlösungen können durch einfache Maßnahmen, wie sie dem Fachmann geläufig sind, beispielsweise durch Strippen mit Inertgas, Strippen mit Dampf und/oder Evakuieren, regeneriert werden. Beispielsweise werden die Waschflüssigkeiten zum Zwecke der Regeneration unter Druckhaltung bei ca. 5 bar auf 160°C erhitzt.

Die erste und zweite Variante des erfindungsgemäßen Verfahrens können in all den Vorrichtungen, wie sie normalerweise zum Waschen von Gasen verwendet werden, die übliche Pumpen, Ventile, Wäscher und Desorber enthalten, durchgeführt werden.

Bei der zweiten Variante des erfindungsgemäßen Verfahrens, bei der Schwefeloxide und/oder Stickoxide entfernt werden, werden gleichzeitig reduzierende Verbindungen eingesetzt. Beispiele für reduzierende Verbindungen sind reduzierende Schwefelverbindungen, wie Schwefelwasserstoff, Schwefelkohlenstoff, Kohlenoxisulfid, Mercaptane oder ihre Gemische und/oder Kohlenstoff-Sauerstoff-Verbindungen, wie Formaldehyd, Methanol, Ameisensäure, Ameisensäureester oder ihre Gemische. Diese Reduktionsmittel werden zu den Reaktionslösungen gegeben, und dann finden die Umsetzungen gemäß den folgenden Bruttoreaktionsgleichungen statt:

$$SO_2 + CS_2 \longrightarrow CO_2 + 3S_{fl} \quad (1)$$
$$SO_2 + 2\ COS \longrightarrow 2\ CO_2 + 3S_{fl} \quad (2)$$
$$SO_2 + 2\ H_2S \longrightarrow 2\ H_2O + 3\ S_{fl} \quad (3)$$
$$SO_2 + 2\ HCOOH \longrightarrow 2\ CO_2 + 2\ H_2O + S_{fl} \quad (4)$$

$$2NO + CS_2 \longrightarrow CO_2 + N_2 + 2S_{fl} \qquad (5)$$
$$NO + COS \longrightarrow CO_2 + 1/2\ N_2 + S_{fl} \qquad (6)$$
$$NO + H_2S \longrightarrow H_2O + 1/2\ N_2 + S_{fl} \qquad (7)$$
$$NO + HCOOH \longrightarrow CO_2 + H_2O + 1/2\ N_2 \qquad (8)$$

oder allgemein bei Verwendung reduzierenden Schwefelverbindungen unter Einschluß höherer Oxide

$$SO_x + x\ S^{2-} \longrightarrow (x + 1)\ S_{fl} + x\ O^{2-} \qquad (9)$$
$$NO_x + x\ S^{2-} \longrightarrow x\ S_{fl} + 1/2\ N_2 + x\ O^{2-} \qquad (10)$$

In den deutschen Offenlegungsschriften 19 10 127 und 21 58 072 wird ein Verfahren zur Überführung von Schwefelwasserstoff und Schwefeldioxid in elementaren Schwefel beschrieben, das in Gegenwart eines Katalysators arbeitet, der aus dem Salz eines Metalls der Gruppe I-A und II-A des Periodensystems und einer organischen Polycarbonsäure besteht, von der mindestens eine Säurefunktion mit einer Verbindung R-OH verestert ist.

Es wurde gefunden, daß die Kontaktmedien gemäß den Offenlegungsschriften 19 10 127 und 21 58 072 länger wirksam bleiben und neben den Reaktionen von Schwefelwasserstoff mit Schwefeloxiden auch die Reaktionen von Schwefelkohlenstoff und/oder Kohlenoxisulfid mit Schwefeloxiden katalysieren, wenn man ihnen Salze der Elemente des Scandiums, des Yttriums, der Lanthanide und Actinide zusetzt.

Es ist bei der zweiten Variante des erfindungsgemäßen Verfahrens nicht notwendig, daß die Alkalimetalle oder Erdalkalimetalle als Salze teilveresterter Polycarbonsäuren vorliegen. Vielmehr wurde gefunden, daß Salze der Metalle der Gruppe I-A und II-A des Periodensystems und einer Monocarbonsäure, wie Carbonate oder Thiocarbonate, in

wäßriger und organischer Lösung die Wirkung der Komplexe des Scandiums, des Yttriums, der Lanthanide und der Actinide nicht behindern, sondern im Zusammenwirken mit den genannten Komplexen neben der Reaktion zwischen Schwefelwasserstoff und Schwefeldioxid auch die Reaktionen zwischen Schwefelkohlenstoff und/oder Kohlenoxisulfid mit Schwefeloxiden katalysieren. Bemerkenswert ist dabei, daß im Temperaturbereich zwischen 60 und 114°C gut filtrierbare Schwefelkristalle erhalten werden. Die Anwesenheit von Ammoniak fördert den Ablauf sowohl der Redox- als auch der Hydrolysereaktionen.

Bezüglich der Reinigung stickoxidhaltiger Gase ist bekannt, daß das Aufnahmevermögen wäßriger Lösungen für Stickstoffmonoxid verbessert werden kann, indem man den wäßrigen Lösungen Eisen(II)-EDTA-Komplexe zusetzt (zum Beispiel Heiting, B., Fortschr.-Ber. VDI-Z., Reihe 3, Nr. 75). Nun wurde gefunden, daß die Zugabe von Salzen des Scandiums, des Lanthans, der Lanthanide und der Gruppe der Actinide zu hochsiedenden organischen Flüssigkeiten, wie Polyglykolen oder Polyglykolethern, die bereits Salze der Übergangsmetalle, zum Beispiel des Chroms, Eisens, Kobalts, Nickels und Rutheniums, und gegebenenfalls auch der Alkali- und Erdalkalimetalle enthalten, die erreichbaren Umsatzgrade gemäß den Bruttoreaktionsgleichungen (1) bis (8) wesentlich erhöhen.

Der Einsatzbereich der wäßrigen und organischen Salzlösungen aus Chelaten des Scandiums, des Yttriums, der Lanthanide und Actinide und Carbonaten bzw. Thiocarbonaten der Alkali- und Erdalkalimetalle sowie gegebenenfalls mit anorganischen oder organischen Verbindungen der Übergangsmetalle ist sehr groß und liegt beispielsweise zwischen 20 und 160°C. Will man den sich gemäß den Bruttoreaktionsgleichungen (1) bis (8) bildenden Elementarschwefel in flüssiger Form gewinnen, so wird man vorzugsweise im Temperaturbereich zwischen 120 und 130°C, also knapp über dem natürlichen Schwefelschmelzpunkt, arbeiten.

Die Salze der Elemente des Scandiums, des Yttriums, des Lanthans, der Lanthanide und Actinide, der Alkali- und Erdalkalimetalle sowie der Übergangselemente können bis zur Sättigungsgrenze in Wasser oder organische Flüssigkeiten eingebracht werden; erfindungsgemäß erweisen sich jedoch verdünnte Lösungen mit Salzkonzentrationen von 0,1 bis 5 Gew.-% als ausreichend. Der Wassergehalt der organischen Flüssigkeiten ist von der Temperatur abhängig und kann gegebenenfalls durch eine Druckhaltung geregelt werden.

Die als Reduktionsmittel dienenden Verbindungen, wie Schwefelwasserstoff, Schwefelkohlenstoff, Kohlenoxisulfid und Mercaptane, Ameisensäure, Formaldehyd, Methanol und Ester der Ameisensäure können den Kontaktmedien vor dem Waschprozeß zugesetzt werden. Dies ist möglich, wenn die Lösungsmittel für die katalytisch wirkenden Salze eine gute Lösefähigkeit für die betreffenden Reduktionsmittel besitzen. Beispielsweise beträgt die Löslichkeit von Schwefelkohlenstoff in Polyethylenglykol 400 bei Raumtemperatur 10 Gew.-%, von Schwefelwasserstoff bei einem Partialdruck von 1 bar und einer Temperatur von 25°C in Tetraethylenglykoldimethylether 22 $Ncm^3/g$ und von Kohlenoxisulfid bei einem Partialdruck von 1 bar und einer Temperatur von 100°C noch 2,65 $Ncm^3/g$. Aufgrund der günstigen Aufnahmefähigkeit der Kontaktmedien für die Reduktionsmittel wird die Vorbeladung zweckmäßigerweise so eingerichtet, daß beim Waschprozeß ein stöchiometrischer Umsatz erfolgt.

Eine andere Möglichkeit, die Reduktionsmittel in den Prozeß einzubringen, ist die stöchiometrische Zugabe zu dem zu reinigenden Gasstrom.

Grundsätzlich ist es mit den Katalysatoren nach dem Verfahren dieser Erfindung ebenfalls möglich, durch Zusatz von Schwefel- und/oder Stickoxiden aus Gasströmen, die Schwefelkohlenstoff, Kohlenoxisulfid, Schwefelwasserstoff und Mercaptane enthalten, diese Schwefelverbindungen zu entfernen.

Der Wäscher, in dem das erfindungsgemäße Verfahren durchgeführt wird, kann beliebig gestaltet sein.

Überraschenderweise wurde weiterhin gefunden, daß man in Gasgemischen enthaltene Organoschwefelverbindungen, wie COS und $CS_2$, mit Schwefel- bzw. Stickoxiden quantitativ in Gegenwart von festen Katalysatoren zu Kohlendioxid und Elementarschwefel bzw. zu Kohlendioxid, Elementarschwefel und elementarem Stickstoff umsetzen kann.

Das erfindungsgemäße Verfahren gemäß der dritten Variante zur Entfernung von Schwefel- und/oder Stickoxiden mit reduzierenden Verbindungen aus sie enthaltenden Gasen bei erhöhter Temperatur in Anwesenheit von Katalysatoren, ist dadurch gekennzeichnet, daß als Katalysatoren Katalysatoren verwendet werden, die Verbindungen des Scandiums, Yttriums, der Elemente der Lanthanidenreihe, der Elemente der Actinidenreihe oder ihrer Gemische enthalten, und daß die Reaktion bei einer Temperatur im Bereich von 114 bis 150°C durchgeführt wird.

Überraschenderweise wurde gefunden, daß das Verfahren gemäß der dritten Variante bei tiefen Temperaturen im Bereich von 114 bis 150°C durchgeführt werden kann und daß die Reduktion von $SO_2$ und $NO_x$ an den genannten Katalysatoren simultan abläuft. Lange bekannt ist die katalytische Reduktion dieser Verbindungen bei hohen Temperaturen. Eine weitere überraschende Beobachtung ist, daß diese Katalysatoren durch den entstehenden flüssigen Schwefel nicht an Aktivität einbüßen. Alle bisher bekannten, die Reduktion von $SO_2$ zu elementarem Schwefel katalysierenden Kontakte verlieren durch den entstehenden flüssigen Schwefel ihre Aktivität. Deswegen müssen

sie bei Temperaturen betrieben werden, bei denen Schwefeldampf entsteht. Bei Temperaturen unter 200°C ist jedoch der Schwefeldampfdruck so gering, daß praktisch nur flüssiger Schwefel entsteht. Die dritte Variante des erfindungsgemäßen Verfahrens läuft gemäß den folgenden Bruttoreaktionsgleichungen ab:

$$SO_2 + CS_2 \longrightarrow CO_2 + 3\ S_{fl}$$
$$SO_2 + 2\ COS \longrightarrow 2\ CO_2 + 3\ S_{fl}$$
$$2\ SO_3 + 3\ CS_2 \longrightarrow 3\ CO_2 + 12\ S_{fl}$$
$$SO_3 + 3\ COS \longrightarrow 3\ CO_2 + 4\ S_{fl}$$
$$SO_2 + 2HCOOH \longrightarrow CO_2 + 2H_2O + S_{fl}$$
$$2\ NO + CS_2 \longrightarrow CO_2 + N_2 + 2\ S_{fl}$$
$$NO + COS \longrightarrow CO_2 + 1/2\ N_2 + S_{fl}$$
$$NO_2 + CS_2 \longrightarrow CO_2 + 1/2\ N_2 + 2\ S_{fl}$$
$$NO_2 + 2\ COS \longrightarrow 2\ CO_2 + 1/2\ N_2 + 2\ S_{fl}$$
$$NO + HCOOH \longrightarrow CO_2 + H_2O + 1/2N_2$$

Die Temperaturen liegen dabei knapp über dem Schmelzpunkt des Schwefels zwischen 120 und 150°C. Überraschenderweise führt die Kapillarkondensation des Schwefels an den festen Kontakten nicht zu der Verminderung der Reaktionsgeschwindigkeit, wie man sie bei der Claus-Reaktion bei Unterschreiten einer Temperatur von ca. 200°C im allgemeinen beobachtet, wenn man die erfindungsgemäßen Katalysatoren anwendet. Vorteilhafterweise enthalten die Gasgemische einen gewissen Anteil an Wasserdampf.

Wenn der Partialdruck des entstehenden elementaren Schwefels den Sättigungsdampfdruck bei der Prozeßtemperatur erreicht, kondensiert der Schwefel auf dem Kontakt. Das führt dazu, daß der Katalysator seine Aktivität weitgehend verliert. Wegen des geringen Sättigungsdampfdruckes ist die katalytische Umsetzung von Schwefeloxiden und Stickoxiden in Reaktionen, bei denen elementarer Schwefel entsteht, nach den bekannten Verfahren nur bei Temperaturen oberhalb 200°C praktikabel.

Überraschenderweise werden die Kontakte durch den entstehenden elementaren Schwefel nicht beeinträchtigt. Vielmehr läuft der entstehende Schwefel von den Kontakten ab. Nur dann, wenn der Strom an flüssigem Schwefel bestimmte Werte überschreitet, ist ein Abfall der Aktivität zu beobachten. Durch Unterteilen der Katalysatorschicht und Abführen des jeweils in einer Schicht angefallenen Schwefels kann der durch hydrodynamische Effekte bedingte Abfall der Aktivität des Katalysators vermieden werden.

Mit den Katalysatoren kann man daher im Temperaturbereich von 114 bis 150°C, wo elementarer Schwefel in flüssiger Form entsteht, arbeiten.

Bei der dritten Variante des erfindungsgemäßen Verfahrens können all die Katalysatoren als Trägermaterial verwendet werden, die auch für das bekannte Claus-Verfahren eingesetzt werden. Beispiele für Trägermaterialien sind Aluminiumoxid, Aluminiumsilicat, keramische Massen, Blähtone, Metalloxide, wie Kobaltoxid, Molybdänoxid, Titanoxid, oder ihre Gemische. Die Trägermaterialien können inert oder aktiv sein und in beliebigen Formen vorliegen. Beispielsweise können sie in Form von Perlen, Pellets, hohlen Formkörpern, Ringen, Strängen, Kugeln oder als beliebig geformte Formkörper vorliegen.

Beispiele für Elemente der Lanthanidenreihe sind La, Ce, Pr, Nd, Pm, Sm, Eu, Gd, Tb, Dy, Ho, Er, Tm, Yb und Lu. Beispiele für Elemente der Actinidenreihe sind Ac, Th, Pa und U.

Es ist bevorzugt, daß der Katalysator einen Träger enthält. Als Katalysatoren können jedoch reine Verbindungen von Scandium, Yttrium, der Lanthanide, der Actinide oder ihrer Gemische verwendet werden. Beispiele sind die Oxide, Phosphate oder die in der Natur

vorkommenden Mineralien. Als Mineralien, die verwendet werden können, können Ceriterden und die Yttererden genannt werden. Die Ceriterden sind Mineralien, die Lanthan bis Neodym, Samarium und Europium enthalten und in denen Cer, in einigen Fällen auch Lanthan oder Neodym, als Hauptbestandteil vorkommt. Typische Vertreter dieser Gruppe sind Bastnäsit, Monazit und Allanit. Monazit ist besonders bevorzugt.

Die Yttererden sind Mineralien mit Gadolinium bis Lutetium und mit Yttrium als Hauptbestandteil. Typische Vertreter dieser Gruppe sind Xenotim und Gadolinit. Weiterhin können auch komplexe Mineralien, in denen sowohl Yttererden als auch Ceriterden vertreten sind, verwendet werden. Auch Mineralien, die in die Seltenen Erden angereichert sind, wie bestimmte Sorten Apatit und Loparit können bei der vorliegenden Erfindung eingesetzt werden.

Im allgemeinen enthält der Katalysator 0,1 bis 10 Gew.-%, vorzugsweise 0,5 bis 5 Gew.-% Scandium, Yttrium, Elemente der Lantanidenreihe, Elemente der Actinidenreihe oder ihre Gemische ausgedrückt als Metall bezogen auf die Gesamtmenge des Katalysators und 99,9 bis 90 Gew.-% Trägermaterial wie Aluminiumoxid, Aluminiumsilicat, keramische Massen, Blähton, Metalloxid oder deren Gemische.

Der Fachmann kann auf einfache Weise geeignete Katalysatorträgermaterialien auswählen. Ein geeignetes Katalysatorträgermaterial auf Aluminiumoxid-Basis ist beispielsweise der zu mindestens 95 Gew.-% aus $Al_2O_3$ bestehende COS-Hydrolyse-Kontakt R 10 - 15 der Fa. BASF, Ludwigshafen. Die verwendeten Strangpreßlinge mit einem Durchmesser von 4 mm haben eine wahre Dichte von 3,16 $g/cm^3$, eine Scheindichte von 1,1 $g/cm^3$, eine Porosität von 0,65 und eine BET-Oberfläche von 257 $m^2/g$.

Geeignete Aluminiumsilicate sind solche von Faujasit-Typ, wie sie als FCC-Katalysatoren Verwendung finden. Die Fa. Grace, P.O.Box 2117, Baltimore, Maryland 21 203, gibt zum Beispiel für ihr Handelsprodukt DA 250, als chemische Analysenwerte an: $Al_2O_3$ 46,3 Gew.-%, $Na_2O$ 0,23 Gew.-%, Fe 0,7 Gew.-%, als physikalische Analysenwerte: Oberfläche 120 $m^2/g$, Porenvolumen 0,28 $cm^3/g$, Scheindichte 0,85 $g/cm^3$.

Ein geeigneter, metalloxidischer Katalysator hat zum Beispiel folgende Zusammensetzung: $MoO_3$ 14 Gew.-%, CoO 5 Gew.-%, $SiO_2$ 2 Gew.-%, $SO_4$ 3 Gew.-%, $Na_2O$ 0,7 Gew.-%, $Al_2O_3$ Rest (Träger). Im Labor verwendete Strangpreßlinge von 1 mm Durchmesser und Längen zwischen 2 und 8 mm, haben eine wahre Dichte von 3,58 $g/cm^3$, eine Scheindichte von 1,29 $g/cm^3$, eine Porosität von 0,64 und eine BET-Oberfläche von 219 $m^2/g$. Die Katalysatoren können in Form von Strängen, Pellets, Granulaten, Tabletten, Kugeln und Ringen oder als beliebig geformte Formkörper verwendet werden.

Die Herstellung der erfindungsgemäß verwendeten Katalysatoren kann auf verschiedene Arten erfolgen. Man kann Trägermaterialien in Lösungen von Salzen der aktiven Metalle suspendieren, die Salze in an sich bekannter Weise auf den Trägermaterialien ausfällen, die beladenen Trägermaterialien aus der Suspension in an sich bekannter Weise abtrennen und bei Temperaturen von 100 bis 1000°C während einer Zeit von 1 bis 10 Stunden trocknen bzw. sintern. Man kann auch auf inerte Trägermaterialien, zusammen mit unlöslichen Verbindungen des Scandiums, des Yttriums, der Lanthanidenreihe und/oder der Actinidenreihe unlösliche Verbindungen des Aluminiums oder der Metalloxide abscheiden. Es ist weiterhin bevorzugt, daß die erfindungsgemäß verwendeten Katalysatoren Erdalkalimetalle enthalten.

Kontaktmassen können erfindungsgemäß dadurch erhalten werden, daß man Aluminiumoxide, Aluminiumsilicate oder Metalloxide auf Aluminiumoxidträgermaterial mit Salzen des Scandiums, des Yttriums, der Lanthanidenreihe und/oder der Actinidenreihe imprägniert. Die imprägnierten Katalysatoren können zum Beispiel dadurch hergestellt werden, daß man Pellets oder Stränge beispielsweise aus Aluminiumoxid evakuiert und anschließend mit wäßrigen Lösungen der Chloride, Nitrate und Sulfate der Erdalkalimetalle, des Scandiums, des Yttriums, der Lanthanide, oder der Actinide beaufschlagt. Durch Zugabe von Hydroxiden, Carbonaten oder Phosphaten der Alkalimetalle, vorzugsweise des Natriums und Kaliums, wird hierauf eine Salzfällung bei Temperaturen von 20 bis 90°C, vorzugsweise bei 30 bis 70°C, durchgeführt. Die hierbei erhaltene Kontaktmasse wird von der Suspension getrennt und bei Temperaturen von 100 bis 200°C, vorzugsweise bei 100 bis 120°C, getrocknet.

Daneben werden wirksame Kontaktmassen dadurch erhalten, daß man für sich inaktive Materialien, wie zum Beispiel beliebig geformte gesinterte Keramikmassen oder Blähtone (zum Beispiel Liapor$^{(R)}$) wie vorstehend beschrieben imprägniert, oder auf diese basische Aluminiumhydroxidacetat -Seltene Erden- Suspensionen bei Temperaturen bis zu 1000°C auftrocknet.

Die auf eine der vorstehenden Arten hergestellten Katalysatoren werden überraschenderweise von flüssigem Schwefel im Temperaturbereich zwischen 120°C und 150°C nicht benetzt. So wird, unter den Bedingungen der aufgeführten Beispiele, in fester Form auf die Kontaktschüttung aufgebrachter Elementarschwefel aufgeschmolzen und perlt über die Kontaktschüttung ab, ohne daß eine bleibende Minderung der Aktivität des Katalysators feststellbar ist.

Zur Herstellung der Imprägniermittel können lösliche Komponenten, zum Beispiel Chloride, Nitrate, Acetate, Acetylacetonate, Chromate des Scandiums, des Yttriums, der Seltenen Erden, neben solchen des Aluminiums und/ oder der Erdalkalimetalle, bis zur Sättigungsgrenze in Wasser eingebracht werden, um gegebenenfalls mit stöchiometrischen Mengen an Alkalihydroxyd, -carbonat, -sulfat, -phosphat, etc. gefällt zu werden. Zum anderen können schwer- bzw. unlösliche Komponenten, zum Beispiel Oxide, Sulfide, Hydroxide, Hydroxidacetate, Carbonate, Phosphate, Sulfate, Silikate des Scandiums, des Yttriums, der Seltenen Erden sowie des Aluminiums und/ oder der Alkali- und Erdalkalimetalle in beliebigem Gewichtsverhältnis in Wasser aufgeschlämmt werden. Zur Behandlung von 1 Liter Trägermaterial mit 1 Liter Imprägniermittel sind im allgemeinen Gehalte an Erdalkaliverbindungen, und/oder Seltenen Erden Verbindungen von 1 bis 10 Gew.-% und/oder Aluminiumverbindungen im Imprägniermittel von 5 bis 90 Gew.-% ausreichend.

Gemäß einer bevorzugten Ausführungsform werden die über die Katalysatorschüttung geführten Gasströme mit Wasser bei Temperaturen von 10 bis 100°C befeuchtet. Bei dem erfindungsgemäßen Verfahren gemäß der dritten Variante können als reduzierende Verbindungen Schwefelwasserstoff, Kohlenoxisulfid, Schwefelkohlenstoff oder Verbindungen mit Kohlenstoff-Sauerstoff-Bindungen, wie Formaldehyd, Methanol, Ameisensäure, Ameisensäuremethylester oder ihre Gemische, verwendet werden. Die reduzierenden Verbindungen werden in einer Menge zugegeben, wie es beim Claus-Verfahren üblich ist, so daß zumindest die stöchiometrisch erforderliche Menge vorhanden ist. Im allgemeinen arbeitet man mit einem geringen Überschuß an reduzierenden Verbindungen.

Die Umsetzung der Organoschwefelverbindungen COS und $CS_2$ sowie von $H_2S$ mit Schwefel- und/oder Stickoxiden in Gegenwart der erfindungsgemäß anzuwendenden Katalysatoren ist bei Temperaturen von 114 bis 150°C, vorzugsweise zwischen 120 und 140°C, durchführbar, wobei die Leerraumströmungsgeschwindigkeiten etwa 100 Vol./Vol./Std. betragen, was einer praktischen Betriebsweise bei technischen Anlagen entspricht.

Die Konzentration der Schadgaskomponenten können zwischen wenigen ppm bis Volumenprozenten schwanken. Der Redoxpartner wird im stöchiometrischen Verhältnis, gemäß den vorstehenden Gleichungen, dem zu behandelnden Gasstrom zudosiert.

Zweckmäßig wird mit einem gewissen Wasserdampfanteil im Gasgemisch gearbeitet, im allgemeinen genügt ein Wasserdampfpartialdruck von etwa 17 bis 150 Torr (0,02 bis 0,200 atm). Die jeweils einzuhaltenden Reaktionsbedingungen richten sich nach der Zusammensetzung und dem Druck des zu behandelnden Gasgemisches und können durch Vorversuche ermittelt werden. Die Berührung der gasförmigen Redoxpartner und der Katalysatorschüttung kann in herkömmlichen Kontaktapparaten erfolgen. Geeignete Kontakttürme können mehrere Schüttungs- oder Packungszonen für den Katalysator enthalten, ferner Demister, Vorrichtungen zur Nachwäsche des Reingasstromes zum Beispiel mit flüssigem Schwefel, Verteilerböden, sowie Sammelvorrichtungen für den ablaufenden flüssigen Schwefel. Bei Bedarf kann das Katalysatorbett auch bewegt angeordnet werden, zum Beispiel als Kugel-Umlaufsystem.

Die folgenden Beispiele erläutern die Erfindung.

I.

Beispiele für die Entfernung von Kohlenoxisulfid, Schwefelkohlenstoff und Mercaptan, gegebenenfalls neben Schwefelwasserstoff

Beispiel 1

Eine 300-ml-Glasfrittenbodenflasche (Porosität der Fritte: Por = 0; mittlerer Gasblasendurchmesser: 2 mm) wird bei 80°C temperiert und mit 200 ml wäßrigem Reaktionsmedium gefüllt. Anschließend wird ein bei 80°C befeuchteter und mit den Schadgaskomponenten COS und $CS_2$ beaufschlagter Stickstoffstrom von 100 ml/min über die Fritte in das Reaktionsmedium dispergiert. Die Verweilzeit der Blasen im Reaktionsmedium beträgt ca. 2 Sekunden. Unter diesen Bedingungen konnten in Abhängigkeit von der Zusammensetzung des Reaktionsmediums die nachfolgenden Ergebnisse erzielt werden (Tabelle I):

Tabelle I

| Gas | Reaktionsmedium | | | | |
|---|---|---|---|---|---|
| Stickstoff | Wasser | Wasser + 1 Gew.-% KOH | Wasser + 0,5 Gew.-% $C_3H_5KOS_2$ | Wasser + 0,25 Gew.-% $Pr(thd)_3$ | Wasser + 0,5 Gew.-% $Yb(fod)_3$ |
| Gehalt an Schwefelverbindungen beim Eintritt | | | | | |
| COS (Vol.-ppm) | 1.000 | 50.000 | 7.000 | 17.000 | 7.000 |
| $CS_2$ (Vol.-ppm) | 2.500 | 8.000 | 700 | 700 | 10.000 |
| Gehalt an Schwefelverbindungen am Austritt | | | | | |
| COS (Vol.-ppm) | 830 | 32.150 | 2.793 | 5.338 | 2.000 |
| $CS_2$ (Vol.-ppm) | 2.500 | 6.296 | 253 | 312 | 4.300 |
| Umsatz (%) COS | 17 | 35,7 | 60,1 | 68,6 | 71,4 |
| Umsatz (%) $CS_2$ | 0 | 21,3 | 63,9 | 55,4 | 57,0 |

Beispiel 2

Eine 300-ml-Glasfrittenbodenflasche (Porosität der Fritte: Por = 2; mittlerer Gasblasendurchmesser: 1 mm) wird mit 200 ml wäßrigem Reaktionsmedium gefüllt und dieses 40 Stunden lang unter Rückflußkühlung am Sieden gehalten. Nach Abkühlung auf Raumtemperatur wird die Lösung evakuiert und anschließend bei einer Druckhaltung von 1,5 bar bei 100°C temperiert. Ein Stickstoffstrom von 150 ml/min mit einem Gehalt an Schwefelkohlenstoff von 22.500 Vol.-ppm wird über die Fritte in das Reaktionsmedium dispergiert. Die Steigzeit der Gasblasen in der Flüssigkeitssäule beträgt ca. 1 Sekunde. Es werden die nachfolgend aufgeführten Ergebnisse erhalten (Tabelle II):

Tabelle II

| Gas<br><br>Stickstoff | Wasser<br>+ 10 Gew.-% Acetylaceton<br>+ 1 Gew.-% $K_2CO_3$<br>+ 10 Gew.-% $La(NO_3)_3 \cdot 6H_2O$ | Wasser<br>+ 10 Gew.-% Acetylaceton<br>+ 1 Gew.-% $C_3H_5KOS_2$<br>+ 10 Gew.-% $La(NO_3)_3 \cdot 6H_2O$ | Wasser<br>+ 10 Gew.-% Acetylaceton<br>+ 1 Gew.-% $C_3H_5KOS_2$<br>+ 10 Gew.-% $Th(NO_3)_4 \cdot 5H_2O$ |
|---|---|---|---|
| Gehalt an Schwefelkohlenstoff am Austritt (Vol.-ppm) | 4.680 | 1.777 | 743 |
| Umsatz (%) | 79,2 | 92,1 | 96,7 |
| pH-Wert des Reaktionsmediums | | | |
| Beginn | 5,5 | 4,5 | 3,0 |
| Ende | 4,4 | 3,5 | 2,5 |

## Beispiel 3

Eine 300-ml-Glasfrittenbodenflasche (Porosität der Fritte: Por = 2; mittlerer Gasblasendurchmesser: 1 mm) wird mit 200 ml wäßrigem Reaktionsmedium gefüllt und dieses 40 Stunden lang unter Rückflußkühlung am Sieden gehalten. Nach Abkühlung auf Raumtemperatur wird die Lösung evakuiert und anschließend bei einer Druckhaltung von 1,5 bar bei 100°C temperiert. Ein Stickstoffstrom von 150 ml/min mit einem Gehalt an Schwefelkohlenstoff von 22.500 Vol.-ppm wird über die Fritte in das Reaktionsmedium dispergiert. Die Steigzeit der Gasblasen in der Flüssigkeitssäule beträgt ca. 1 Sekunde. Es werden die nachfolgend aufgeführten Ergebnisse erhalten (Tabelle III):

Tabelle III

| Gas<br>Stickstoff | Wasser + 10 Gew.-% Acetylaceton + 1 Gew.-% $K_2CO_3$ + 10 Gew.-% $La(NO_3)_3 \cdot 6H_2O$ + 2,5 Gew.-% Diethylaminoethanol | Wasser + 10 Gew.-% Acetylaceton + 1 Gew.-% $C_3H_5KOS_2$ + 10 Gew.-% $La(NO_3)_3 \cdot 6H_2O$ + 2,5 Gew.-% Diethanolmethylamin | Wasser + 10 Gew.-% Acetylaceton + 1 Gew.-% $C_3H_5KOS_2$ + 10 Gew.-% $Th(NO_3)_4 \cdot 5H_2O$ + 2,5 Gew.-% Triethanolamin |
|---|---|---|---|
| Gehalt an Schwefelkohlenstoff am Austritt (Vol.-ppm) | 3.105 | 405 | 0 |
| Umsatz (%) | 86,2 | 98,2 | 100 |
| pH-Wert des Reaktionsmediums | 7 | 5,0 | 4,0 |

B e i s p i e l 4

Eine 300-ml-Glasfrittenbodenflasche (Porosität der Fritte: Por = 0; mittlerer Gasblasendurchmesser: 2 mm) wird bei 85°C temperiert und mit 200 ml Reaktionsmedium gefüllt. Anschließend wird ein bei 80°C befeuchteter und mit Schwefelkohlenstoff beaufschlagter Stickstoffstrom von 100 ml/min über die Fritte in das Reaktionsmedium dispergiert. Die Verweilzeit der Gasblasen im Reaktionsmedium beträgt ca. 2 Sekunden. Unter diesen Bedingungen wurden in Abhängigkeit von der Zusammensetzung des Reaktionsmediums folgende Ergebnisse erzielt (Tabelle IV):

Tabelle IV

| Gas | Reaktionsmedium | | | |
|---|---|---|---|---|
| Stickstoff | Diethylaminoethanol 10 Gew.-% Wasser | Diethylaminoethanol 10 Gew.-% Wasser 0,25 Gew.-% $Pr(thd)_3$ | Triethanolamin 10 Gew.-% Wasser | Triethanolamin 10 Gew.-% Wasser 0,25 Gew.-% $Pr(thd)_3$ |
| Gehalt an Schwefelkohlenstoff am Eintritt (Vol.-ppm) | 25.000 | 25.000 | 15.000 | 15.000 |
| Gehalt an Schwefelkohlenstoff am Austritt (Vol.-ppm) | 4.275 | 1.350 | 2.055 | 495 |
| Auswaschung (%) | 82,9 | 94,6 | 86,3 | 96,7 |

Beispiel 5

Es werden 10 Glasfrittenbodenflaschen (Volumen: 250 ml; Porosität der Fritte: Por = 1; mittlerer Gasblasendurchmesser: 2 mm) in Reihe geschaltet und mit jeweils 150 ml Reaktionsmedium gefüllt. Bei einer Druckhaltung von 2 bar wird die Temperatur der Lösung zwischen 80 und 120°C konstant gehalten. Der zu dispergierende Stickstoffstrom wird bei 80°C mit Wasser befeuchtet und mit den Schadgaskomponenten beaufschlagt. Die Verweilzeit der Gasblasen im Reaktionsmedium beträgt für den gewählten Volumenstrom des Gases zwischen 75 und 200 ml/min, über die 10 Flüssigkeitssäulen summiert ca. 10 Sekunden. Die Ergebnisse, wie sie für unterschiedliche Gasphasenzusammensetzungen und unterschiedliche Reaktionsmedien erhalten wurden, sind in der nachfolgenden Tabelle V zusammengefaßt:

Tabelle V

Umsatzgrade in Prozent für unterschiedliche Konzentrationen an Schadgasen im Eingangsstrom in Vol.-ppm

| Versuchsbedingungen und Zusammensetzung des Reaktionsmediums | Eingangskonzentration E (Vol.-ppm) Umsatzgrad U (%) COS | $CS_2$ | $H_2S$ |
|---|---|---|---|
| Temp.=80°C; $V_{gas}$ = 75 ml/min, Wasser, 3 Gew.-% $La(NO_3)_3 \cdot 6H_2O$, 0,2 Gew.-% $C_3H_5KOS_2$ 3 Gew.-% Acetylaceton | E: 268<br>U: 73,5 | E: 1.200<br>U: 56,5 | E: 1.500<br>U: 30,4 |
| Temp.= 80°C; $V_{gas}$ = 150 ml/min, Triethylenglykoldimethylether, 33 Gew.-% Wasser, 1 Gew.-% $LaCl_3$, 0,1 Gew.-% $C_3H_5KOS_2$ 1 Gew.-% Acetylaceton | E: 350<br>U: 88,9 | E: 1.500<br>U: 74,2 | E: 3.500<br>U: 100 |
| Temp.= 90°C; $V_{gas}$ = 200 ml/min, Polyethylenglykol 400, 1 Gew.-% Wasser | E: 80<br>U: 11 | E: 6.000<br>U: 0 | E: 10.000 |
| Polyethylenglykol 400, 1 Gew.-% Wasser, 1 Gew.-% KOH | U: 37 | U: 60 | |
| Polyethylenglykol 400, 1 Gew.-% Wasser, 1 Gew.-% $K_2CO_3$ | U: 39 | U: 77 | |
| Polyethylenglykol 400, 1 Gew.-% Wasser, 1 Gew.-% $K_2CO_3$, 0,5 Gew.-% $Ce(NO_3)_3 \cdot 6H_2O$, 5 Gew.-% Acetylaceton | U: 94 | U: 97 | U: 100 |
| Polyethylenglykol 400, 1 Gew.-% Wasser, 0,5 Gew.-% $C_3H_5KOS_2$, 0,25 Gew.-% $La(thd)_3$ | U: 100 | U: 99,7 | U: 100 |

## Beispiel 6

Ein bei 60°C mit Wasserdampf gesättigter Stickstoffstrom, dessen Gehalt an schwefelhaltigen Verunreinigungen sich wie folgt zusammensetzt:

$H_2S$ 2 Vol.-%
COS 3 g/m³
$CH_3SH$ 1 g/m³

wird mit einer Tetraethylenglykoldimethylether-Lösung, die 0,5 Gew.-% Iraseodym(III)-2,2,6,6-tetramethyl-3,5-heptandionat enthält, in einer Menge von 10 l Lösung pro Nm³ Gas behandelt. Die Umsetzung mit dem zu reinigenden Gas wird in einem mit Raschig-Ringen gefüllten Waschturm durchgeführt, wobei die Waschlösung von oben nach unten dem zu reinigenden Gas entgegenfließt. Bei einer Betriebstemperatur im Wäscher von 80°C beträgt die Verweilzeit des Gases in der Füllkörperschüttung ca. 40 Sekunden. Das gereinigte Gas wird am Kopf des Waschturms abgezogen.

In einem bedingungsgleichen Parallelversuch enthält das Waschmedium zusätzlich 0,5 Gew.-% Kalium-O-ethyldithiocarbonat. Die nachfolgende Tabelle VI gibt über das erzielte Ergebnis Auskunft:

Tabelle VI

| Konzentration der Schadgase am Eintritt | $H_2S$ (Vol.-%) 2 | $COS + CH_3SH$ (g/m³) 4 |
|---|---|---|
| Zusammensetzung des Waschmediums: 0,5 Gew.-% $Pr(thd)_3$ in Tetraethylenglykoldimethylether | | |
| Konzentration der Schadgase am Ausgang | 0,114 | 0,508 |
| Auswaschung (%) | 94,3 | 87,3 |

Tabelle VI (Fortsetzung)

| | | |
|---|---|---|
| Zusammensetzung des Waschmediums: 0,5 Gew.-% $Pr(thd)_3$ 0,5 Gew.-% $C_3H_5KOS_2$ in Tetraethylenglykoldimethylether | | |
| Konzentration der Schadgase am Ausgang | 0,028 | 0,184 |
| Auswaschung (%) | 98,6 | 95,4 |

Die Ergebnisse der Beispiele 1 bis 6 zeigen, daß es mit Hilfe des erfindungsgemäßen Verfahrens möglich ist, in durchaus befriedigender Weise organische Schwefelverbindungen auch neben Schwefelwasserstoff aus den zu reinigenden Gasen in einem Arbeitsgang auszuwaschen.

## II.

## Beispiele für die Entfernung von Schwefeloxiden und Stickoxiden

### B e i s p i e l 7

Eine 300-ml-Galsfrittenbodenflasche (Porosität der Fritte: Por = 2; mittlerer Gasblasendurchmesser: 1 mm) wird bei 80°C temperiert und mit 200 ml wäßrigem Reaktionsmedium gefüllt. Anschließend wird ein bei 80°C befeuchteter und mit den Schadgaskomponenten beaufschlagter Stickstoffstrom von 100 ml/min über die Fritte in das Reaktionsmedium dispergiert. Die Verweilzeit der Blasen im Reaktionsmedium beträgt ca. 1 Sekunde. Unter diesen Bedingungen konnten in Abhängigkeit von der Zusammensetzung des Reaktionsmediums die nachfolgenden Ergebnisse erzielt werden (Tabelle VII):

Tabelle VII

| Zusammensetzung des Reaktionsmediums und erzielter Umsatz | Konzentration am Eingang (Vol.-ppm) | | | | Konzentration am Ausgang (Vol.-ppm) Umsatz (%) | | | |
|---|---|---|---|---|---|---|---|---|
| | $CS_2$ | COS | $H_2S$ | $SO_2$ | $CS_2$ | COS | $H_2S$ | $SO_2$ |
| Lösung von 0,25 Gew.-% $La(thd)_3$ in Wasser | 820 | 7690 | - | 3248 | 340<br>58,5 | 3170<br>58,8 | -<br>- | 0<br>100 |
| Suspension von 0,65 Gew.-% $La_2O_3$ und 0,73 Gew.-% Cyclohexandiamin-(1,2)-tetraessigsäure in Wasser | 556 | 6872 | - | 3062 | 257<br>53,8 | 972<br>85,8 | 970<br>- | 0<br>100 |
| Lösung von 0,5 Gew.-% Kalium-O-ethyldithiocarbonat in Wasser | 998 | 7550 | - | 4020 | 990<br>0,8 | 6493<br>14,0 | -<br>- | 3490<br>13 |
| Lösung von 0,5 Gew.-% $Yb(fod)_3$ und 0,25 Gew.-% Kalium-O-ethyldithiocarbonat in Wasser | - | 409 | 1328 | 1732 | - | 20<br>95,1 | 0<br>100 | 0<br>100 |
| Lösung von 5 Gew.-% $Th(NO_3)_4 \cdot 6H_2O$, 0,5 Gew.-% Kalium-O-ethyldithiocarbonat und 15 Gew.-% Acetylaceton in Wasser | 5683 | - | - | 5000 | 0<br>100 | - | - | 0<br>100 |

## Beispiel 8

Ein bei 80°C mit Wasserdampf gesättigter Stickstoffstrom wird mit den Schadgaskomponenten und den gasförmigen Oxidations- bzw. Reduktionsmitteln beladen. Anschließend wird der Gasstrom einem mit Raschig-Ringen gefüllten Waschturm zugeführt und im Gegenstrom mit der Waschlösung in einer Menge von 10 l Lösung pro $Nm^3$ Gas behandelt. Bei der gewählten Betriebstemperatur im Wäscher von 80°C beträgt die Verweilzeit des Gases in der Füllkörperschüttung ca. 40 Sekunden. Das gereinigte Gas wird am Kopf des Waschturms abgezogen. Die in homogener Phase katalytisch wirkende Waschlösung setzt sich in Gewichtsteilen wie folgt zusammen:

Waschlösung 1: 67 Teile Pentaethylenglykolmethylisopropylether, 33 Teile Wasser, 0,7 Teil $La(NO_3)_3 \cdot 6H_2O$, 0,1 Teil $C_3H_5KOS_2$, 2,2 Teile Acetylaceton

In einem bedingungsgleichen Parallelversuch enthält die Waschlösung (Waschlösung 2):

67 Teile Pentaethylenglykolmethylisopropylether, 33 Teile Wasser, 0,4 Teil $FeSO_4 \cdot 7H_2O$, 0,56 Teil des Dinatriumsalzes der Ethylendiamintetraessigsäure.

In einem weiteren bedingungsgleichen Parallelversuch enthält die Waschlösung (Waschlösung 3) zusätzlich zu den Bestandteilen der Waschlösung 1:

0,4 Teil $FeSO_4 \cdot 7H_2O$ und 0,56 Teil des Dinatriumsalzes der Ethylendiamintetraessigsäure.

In Abhängigkeit von der Zusammensetzung des Eingangsgasstroms und des Waschmediums werden die nachfolgend aufgeführten Ergebnisse erhalten (Tabelle VIII):

Tabelle VIII

| Konzentration der Gaskomponenten am Eingang (Vol.-ppm) | | | | | am Ausgang (Vol.-ppm) Umsatz (%) | | | | |
|---|---|---|---|---|---|---|---|---|---|
| COS | $CS_2$ | $H_2S$ | $SO_2$ | NO | COS | $CS_2$ | $H_2S$ | $SO_2$ | NO |
| Waschlösung 1 | | | | | | | | | |
| 100 | - | 3300 | 1500 | - | 16 | - | 385 | 0 | - |
| | | | | | 84 | - | 88,3 | 100 | - |
| 70 | 100 | 3800 | 2000 | - | 9 | 0 | 20 | 0 | - |
| | | | | | 87,1 | 100 | 99,5 | 100 | - |
| 70 | 1000 | 2400 | 1800 | 1000 | 12 | 66 | 0 | 102 | 148 |
| | | | | | 82,8 | 93,4 | 100 | 94,3 | 85,2 |
| Waschlösung 2 | | | | | | | | | |
| - | - | 2400 | 1800 | 1000 | - | - | 1500 | 1188 | 726 |
| | | | | | | | 37,5 | 34,0 | 27,4 |
| Waschlösung 3 | | | | | | | | | |
| 70 | 1000 | 2000 | 1800 | 1000 | 6 | 77 | 10 | 300 | 87 |
| | | | | | 91,4 | 92,3 | 99,5 | 83,3 | 91,3 |

Beispiel 9

Ein bei 80°C mit Wasserdampf gesättigter Stickstoffstrom, dessen Gehalt an den Schadgaskomponenten

$SO_2$: 2000 Vol.-ppm
NO: 1000 Vol.-ppm

und an der Reduktionskomponente $H_2S$ 5000 Vol.-ppm betrug, wurde mit einer 10gew.%igen Lösung von Tricyclodecandimethylalkohol in Polyethylenglykol 400, welches 1 Gew.-% $Pr(thd)_3$, 2 Gew.-% Lithiumcarbonat und 1 Gew.-% Eisen(II)-ethylendiamintetraessigsäurekomplexsalz enthielt, in einer Menge von 15 l Lösung pro $Nm^3$ Gas behandelt. Bei der gewählten Betriebstemperatur von 125°C in einem mit Raschig-Ringen gefüllten Waschturm beträgt die Verweilzeit des Gases in der Füllkörperschüttung ca. 35 Sekunden. Der Wassergehalt des Waschmediums wurde bei einer Druckhaltung von 2,5 bar auf ca. 10 Gew.-% eingestellt. Das gereinigte Gas wurde am Kopf des Waschturmes, der aus der Waschflüssigkeit in flüssiger Form ausgeschiedene Elementarschwefel aus dem Sumpf desselben abgezogen. Die nachfolgende Tabelle IX gibt über das erzielte Ergebnis Auskunft:

Tabelle IX

| | $SO_2$ (Vol.-ppm) | NO (Vol.-ppm) |
|---|---|---|
| Eingangsgas | 2.000 | 1.000 |
| Ausgangsgas | 32 | 0 |
| Auswaschung (%) | 98,4 | 100 |

Beispiel 10

Ein durch eine bei 86°C temperierte Ameisensäure-Wasser-Mischung azeotroper Zusammensetzung geleiteter Stickstoffstrom wurde mit den Schadgaskomponenten $SO_2$ zu 2.000 Vol.-ppm,

NO zu 500 Vol.-ppm beaufschlagt und mit einer Lösung von 1 Gew.-% Lanthannitrathexahydrat, 3 Gew.-% Acetylaceton, 1 Gew.-% Lithiumpropionat und 0,5 Gew.-% Chrom(III)-Acetat in Pentaethylenglykolmethylisopropylether in einer Menge von 15 l Lösung pro $Nm^3$ Gas behandelt. Bei der gewählten Betriebstemperatur von 130°C in einem mit Raschig-Ringen befüllten Waschturm beträgt die Verweilzeit des Gases ca. 30 Sekunden. Der Wassergehalt der flüssigen Phase stellt sich zu etwa 1,5 Gew.-% ein. Das gereinigte Gas wurde am Kopf des Waschturmes, der aus der Waschflüssigkeit in flüssiger Form ausgeschiedene Elementarschwefel aus dem Sumpf desselben abgezogen. Es wird das nachstehend aufgeführte Ergebnis erhalten (Tabelle X):

Tabelle X

| | Konzentration in Vol.-ppm | | | | |
|---|---|---|---|---|---|
| | $HCO_2H$ | $SO_2$ | NO | $H_2S$ | $CO_2$ |
| Eingangsgas | 4.500 | 2.000 | 500 | 0 | 0 |
| Ausgangsgas | 0 | 140 | 99 | 372 | 4.480 |
| Umsatz (%) | 100 | 93 | 80,2 | - | - |

III.

Beispiele für die Verwendung eines festen Katalysators

B e i s p i e l 11

Durch Versetzen mit 10 g Lanthanchlorid in wäßriger Lösung und Fällung mit Kaliumhydroxid wird 1 kg Aluminiumoxidstränge der Abmessung 4 mm x 8 mm und einer Porosität von 0,65 imprägniert und in ein Reaktionsrohr mit einer Länge von 80 cm und einer lichten Weite von 4 cm eingefüllt. Über die Katalysatorschüttung wird ein bei 20°C befeuchteter Stickstoffstrom mit einer Raumgeschwindigkeit von 150 Vol./Vol./Std. geleitet, dessen Gehalt an $CS_2$ = 1000 ppm, an COS = 500 ppm beträgt und dem die stöchiometrische Menge an NO = 2500 ppm zudosiert wurde. Die mittlere Temperatur im Reaktor beträgt 140°C. Nach 40 cm Katalysatorschüttung sind Organoschwefelverbindungen und Stickstoffmonoxid nicht mehr festzustellen. Am Reaktorausgang wird die stöchiometrische Menge $CO_2$ = 1500 ppm gefunden. Im Reaktorsumpf findet sich elementarer Schwefel in flüssiger Form. Für eine Schüttung aus unimprägnierten Aluminiumoxidsträngen beträgt der Umsatz nach 40 cm Schüttung zum Beispiel für $CS_2$ lediglich 78%.

B e i s p i e l 12

1 kg eines Alumosilicatpulvers ($SiO_2/Al_2O_3$ etwa 2/1) mit einer scheinbaren Dichte von 0,85 g/cm³ und einem Porenvolumen von 0,28 cm³/g wird in 1 l wäßriger Lösung von 15 g Magnesiumchlorid und 5 g Lanthannitrat suspendiert. Die Fällung erfolgt in der siedenden Lösung mit Natriumcarbonat. Der Filtratrückstand wird bei 120°C getrocknet und nach an sich bekannten Methoden zu Pillen verarbeitet. Die so erhaltenen Katalysatorpellets bilden die Schüttung in einem Reaktionsrohr von 80 cm Länge und 4 mm lichter Weite. Über die Katalysatorschüttung wird ein bei 30°C befeuchteter Stickstoffstrom mit der Raumgeschwindigkeit von 100 Vol./Vol./Std. geleitet, dessen Gehalt an $SO_2$ = 1000 ppm,

0214407

an $SO_3$ = 30 ppm, an NO = 700 ppm und an $NO_2$ = 35 ppm beträgt und dem die stöchiometrische Menge an $CS_2$ = 1430 ppm zudosiert wurde. Die mittlere Temperatur im Reaktor beträgt 130°C. Nach 40 cm Katalysatorschüttung hat eine quantitative Umsetzung zu $CO_2$, $N_2$ und Elementarschwefel stattgefunden.

Mit dem Alumosilicatpulver allein wird bei sonst gleichen Bedingungen lediglich ein Umsatz der Schadgase $SO_2$ und NO von kleiner 10% gefunden.

B e i s p i e l 13

1 kg Kontaktstränge aus Co- und Mo-Oxid auf Aluminiumoxid (MoO ca. 15 Gew.-%, CoO ca. 5 Gew.-%) mit einer Porosität von 0,64 werden mit 10 g Thoriumnitrat durch Fällung mit einer 0,1normalen Lösung aus gleichen Teilen primärem und sekundärem Kaliumphosphat imprägniert. Damit wird ein Reaktionsrohr von 80 cm Länge und 4 cm lichter Weite befüllt. Über der Katalysatorschüttung werden zwei Stickstoffströme mit einer Raumgeschwindigkeit von in der Summe 100 Vol./Vol./Std. vermischt. Die Konzentrationen an Schadgasen betragen zum einen an $CS_2$ = 1000 ppm, an COS = 1000 ppm, an $H_2S$ = 1000 ppm, zum anderen an $SO_2$ = 1500 ppm und an NO = 1000 ppm. Die mittlere Temperatur im Reaktor beträgt 150°C. Nach 50 cm Katalysatorschüttung sind die Schadgaskomponenten $CS_2$, COS, $H_2S$, $SO_2$ und NO vollständig in $CO_2$, $N_2$ und Elementarschwefel umgewandelt.

B e i s p i e l 14

Durch Versetzen mit 10 g Lanthannitrathexahydrat in wäßriger Lösung und Fällung mit Natronlauge werden 500 g Aluminiumoxidstränge der Abmessung 4 mm x 8 mm und einer Porosität von 0,65 imprägniert. Nach Trocknung bei 130°C werden die Katalysatorstränge in ein Reaktionsrohr mit der Länge von 80 cm und einer lichten Weite von 40 mm eingefüllt und durch Überleiten eines Wasserdampf-Schwefelkohlenstoff-Gemisches bei 140°C sulfidiert. Anschließend wird über die Katalysatorschüttung ein, bei 96 °C durch eine Ameisensäure-Wasser-Mischung azeotroper Zusammensetzung geleiteter Stickstoffstrom mit einer Raumgeschwindigkeit von 100 Vol./Vol./Std. geführt. Vor Eintritt in den Reaktor wird dem Stickstoffstrom zusätzlich $SO_2$ bis zu einem Gehalt von 2000 Vol.-ppm, NO bis zu einem Gehalt von 500 Vol.-ppm zudosiert. Am Reaktorausgang sind $SO_2$ und NO nicht mehr durch gaschromatographische Analyse nachweisbar; dagegen wird die stöchiometrische Menge $CO_2$ = 4500 Vol.-ppm gefunden.

Beispiel 15

Auf 1 kg Blähtonkugeln (Liapor$^{(R)}$) Typ 3, Schüttdichte 325 ± 25 kg/m³, (Korngröße 4/8 mm) werden aus 1 Liter Imprägniermittel 50 g Aluminiumhydroxidacetat und 5 g Lanthanchlorid aufgetrockent. Mit den behandelten Kugeln wird ein Reaktionsrohr von 5 cm lichter Weite und 25 cm Länge befüllt. Über die regellose Kugelschüttung wird ein bei 60°C befeuchteter Stickstoffstrom mit einer Raumgeschwindigkeit von 100 Vol./Vol./Std. geleitet, dessen Gehalt an $SO_2$ 2000 ppm, an NO 1000 ppm beträgt und dem die stöchiometrische Menge an $H_2S$ = 5000 ppm zudosiert wurde. Die mittlere Temperatur im Reaktor beträgt bei stationären Bedingungen 135°C. Nach Durchströmen einer 5 cm hohen Sprudelschicht aus flüssigem Elementarschwefel bei 125°C ist das den Reaktor verlassende Reingas von Elementarschwefeldämpfen befreit. Die Analyse der Gasphase am Reaktorausgang ergibt einen Umsatz bezüglich $SO_2$ von 89%, bezüglich NO von 68%. Gibt man auf die Katalysatorschüttung 10 g Schwefelblüte, so wird diese aufgeschmolzen und perlt über die Schüttung, ohne daß diese benetzt wird,

ab. Dabei sinkt der Umsatz von $SO_2$ und NO vorübergehend auf Werte kleiner 50% und erreicht im Verlaufe von 1 bis 2 Stunden wieder die vor der Zugabe der Schwefelblüte gemessenen Umsatzgerade für $SO_2$ und NO.

PATENTANSPRÜCHE

1. Verfahren zur Entfernung von Kohlenoxisulfid, Schwefelkohlenstoff und Mercaptanen, gegebenenfalls neben Schwefelwasserstoff aus diese Verbindungen enthaltenden Gasen in einem Verfahrensschritt durch Waschen der zu reinigenden Gase bei normalem oder erhöhtem Druck und Temperaturen zwischen 20 und 200°C mit einer Lösung, dadurch gekennzeichnet, daß eine Lösung von Salzen des Scandiums, Yttriums, der Lanthanide, der Actinide oder ihrer Gemische in Wasser und/oder in organischen Lösungsmitteln verwendet wird.

2. Verfahren zur Entfernung von Schwefeloxiden und/oder Stickoxiden aus diese Verbindungen enthaltenden Gasen mit Hilfe von reduzierenden Verbindungen in einem Verfahrensschritt durch Waschen der zu reinigenden Gase bei normalem oder erhöhtem Druck und Temperaturen zwischen 20 und 200°C mit einer Lösung, dadurch gekennzeichnet, daß eine Lösung von Salzen des Scandiums, Yttriums, der Lanthanide, der Actinide oder ihrer Gemische in Wasser und/oder organischen Lösungsmitteln verwendet wird.

3. Verfahren nach Anspruch 1 oder 2, dadurch gekennzeichnet, daß als Salze des Scandiums, Yttriums, der Lanthanide, der Actinide oder ihrer Gemische Alkandionate der folgenden Strukturformel

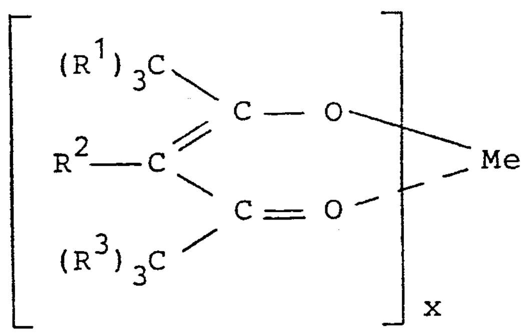

verwendet werden, worin

Me Scandium, Yttrium, ein Element der Lantnanidenreihe oder der Actinidenreihe bedeutet,

x 3 oder 4 bedeutet,

$R^1$, $R^2$ und $R^3$, die gleich oder verschieden sein können, ein Wasserstoffatom, eine Alkyl-, eine Alkenyl- oder eine Arylgruppe bedeuten, wobei diese Gruppen auch durch ein oder mehrere Halogenatome substituiert sein können.

4. Verfahren nach Anspruch 1 oder 2, dadurch gekennzeichnet, daß Salze des Scandiums, des Yttriums, der Lanthanide, der Actinide oder ihrer Gemische in Lösungen, die Diketone enthalten, aufgelöst werden.

5. Verfahren nach Anspruch 1, 2, 3 oder 4, dadurch g e k e n n z e i c h n e t , daß die Lösung von Salzen des Scandiums, Yttriums, der Lanthanide, der Actinide oder ihrer Gemische Salze der Alkalimetalle enthält.

6. Verfahren nach Anspruch 5, dadurch g e k e n n z e i c h n e t , daß als Salze der Alkalimetalle Carbonate und/oder Thiocarbonate verwendet werden.

7. Verfahren nach einem der Ansprüche 1 bis 6, dadurch g e k e n n z e i c h n e t , daß als organische Lösungsmittel hochsiedende organische Lösungsmittel verwendet werden.

8. Verfahren nach Anspruch 7, dadurch g e k e n n z e i c h n e t , daß als hochsiedende organische Lösungsmittel Glykole, Polyglykole, Polyglykolalkylether, Polyglykolarylether, Phosphorsäureester, Ester von Dicarbonsäuren, wie Phthalsäurediester, Adipinsäurediester, Alkanolamine oder Alkylalkanolamine oder deren Gemische verwendet werden.

9. Verfahren nach einem der Ansprüche 1 bis 8, dadurch g e k e n n z e i c h n e t , daß die Alkandionate des Scandiums, Yttriums, der Elemente der Lanthanide, der Actinide oder ihrer Gemische als solche in Lösung gebracht werden oder durch das Zusammenwirken von Chloriden, Nitraten oder Sulfaten mit Alkandionen in Lösung gebracht werden.

10. Verfahren nach einem der Ansprüche 1 bis 9, dadurch g e k e n n z e i c h n e t , daß verdünnte oder gesättigte Salzlösungen verwendet werden.

11. Verfahren nach Anspruch 10, dadurch g e k e n n z e i c h n e t , daß 0,1- bis 5gew.%ige Lösungen der

Lanthanid- und/oder Actinidkomplexe und/oder der Komplexe des Scandiums und Yttriums mit 0,1- bis 5gew.-%ige Lösungen der Alkalicarbonate oder Alkalithiocarbonate verwendet werden.

12. Verfahren nach einem der Ansprüche 1 bis 11, dadurch g e k e n n z e i c h n e t , daß die Waschmedien zum Zwecke der Regeneration unter einer Druckhaltung zwischen 5 und 50 bar auf Temperaturen über 150°C erhitzt und anschließend entspannt werden.

13. Verfahren nach einem der Ansprüche 2 bis 12, dadurch g e k e n n z e i c h n e t , daß als reduzierende Verbindungen Schwefelverbindungen, wie Schwefelwasserstoff, Schwefelkohlenstoff, Kohlenoxisulfid, Mercaptane oder ihre Gemische oder Kohlenstoff-Sauerstoff-Verbindungen, wie Formaldehyd, Methanol, Ameisensäure, oder Ameisensäureester oder ihre Gemische, verwendet werden.

14. Verfahren nach einem der Ansprüche 2 bis 13, dadurch g e k e n n z e i c h n e t , daß die zur Reduktion erforderlichen Verbindungen in der Lösung der Katalysatoren aufgelöst werden und auf diese Weise zur Reaktion beim Kontakt mit den zu reinigenden Gasen gebracht werden.

15. Verfahren nach einem der Ansprüche 2 bis 14, dadurch g e k e n n z e i c h n e t , daß die Behandlung der die Schwefeloxide und Stickoxide enthaltenden Gase mit den die Katalysatoren enthaltenden Lösungen in Anwesenheit der reduzierenden Verbindungen bei Temperaturen von 20 bis 180°C, vorzugsweise 80 bis 130°C, bei normalen oder erhöhten Drücken durchgeführt wird.

16. Verfahren nach einem der Ansprüche 2 bis 15, dadurch g e k e n n z e i c h n e t , daß dem zu rei-

nigenden Gasstrom Wasserdampf zugesetzt wird, um eine ausreichende Hydrolyse der reduzierenden Verbindungen, wie Schwefelkohlenstoff, Kohlenoxisulfid, zu bewirken.

17. Verfahren zur Entfernung von Schwefel- und/oder Stickoxiden mit reduzierenden Verbindungen aus sie enthaltenden Gasen bei erhöhter Temperatur in Anwesenheit von Katalysatoren, dadurch gekennzeichnet, daß als Katalysatoren Katalysatoren verwendet werden, die Verbindungen des Scandiums, Yttriums, der Elemente der Lanthanidenreihe, der Elemente der Actinidenreihe oder ihre Gemische enthalten, und daß die Reaktion bei einer Temperatur im Bereich von 114 bis 150°C durchgeführt wird.

18. Verfahren nach Anspruch 17, dadurch gekennzeichnet, daß ein Katalysator verwendet wird, der 99,9 bis 90 Gew.-% Aluminiumoxid, Aluminiumsilicat, Metalloxid oder ihre Gemische als Trägermaterial, bezogen auf die Gesamtmenge des Katalysators,und 0,1 bis 10 Gew.-%

0214407

Scandium, Yttrium, Elemente der Lanthanidenreihe, Elemente der Actinidenreihe oder ihre Gemische, ausgedrückt als Metall,bezogen auf die Gesamtmenge des Katalysators, enthält.

19. Verfahren nach Anspruch 18,dadurch gekennzeichnet, daß ein Katalysator verwendet wird, der als Metalloxid Kobaltoxid, Molybdänoxid, Titanoxid oder ihre Gemische enthält.

20. Verfahren nach Anspruch 17 oder 18, dadurch gekennzeichnet, daß ein Katalysator verwendet wird, der als Trägermaterial Formkörper aus inerten Aluminiumoxiden, keramischen Massen oder Blähtonen enthält.

21. Verfahren nach einem der Ansprüche 17 bis 20, dadurch gekennzeichnet, daß ein Katalysator verwendet wird, der zusätzlich mit einer Erdalkalimetallverbindung imprägniert ist.

22. Verfahren nach einem der Ansprüche 17 bis 21, dadurch gekennzeichnet, daß ein Katalysator verwendet wird, der erhalten wird, indem man ein Trägermaterial aus Aluminiumoxid, Aluminiumsilicat, keramischen Massen, Blähton, Metalloxid und/oder ihren Gemischen in Wasser suspendiert, eine Lösung aus Salzen des Scandiums, Yttriums, der Elemente der Lanthanidenreihe, der Elemente der Actinidenreihe oder ihrer Gemische zugibt und durch Versetzen mit wasserlöslichen Hydroxiden, Carbonaten, Sulfaten oder Phosphaten unlösliche Verbindungen des Scandiums, Yttriums, der Elemente der Lanthanidenreihe, der Elemente der Actinidenreihe oder ihrer Gemische auf dem Katalysator ausfällt, den Katalysator aus der Lösung in an sich bekannter Weise abtrennt und bei einer Temperatur im Bereich von 100 bis 1000°C trocknet bzw. sintert.

23. Verfahren nach einem der Ansprüche 17 bis 21, dadurch gekennzeichnet, daß ein Katalysator verwendet wird, der erhalten wird, indem die in Wasser unlöslichen Verbindungen des Scandiums, Yttriums, der Elemente der Lanthanidenreihe, der Elemente der Actinidenreihe oder deren Gemische zusammen mit unlöslichen Verbindungen des Aluminiums, der Metalloxide, der Erdalkalien und des Titans in Suspension auf ein Trägermaterial aufgebracht und durch Trocknung und/oder Sinterung fixiert werden.

24. Verfahren nach einem der Ansprüche 22 oder 23, dadurch gekennzeichnet, daß ein Katalysator verwendet wird, der erhalten wird, indem die in Wasser unlöslichen Verbindungen des Scandiums, Yttriums, der Elemente der Lanthanidenreihe, der Elemente der Actinidenreihe oder deren Gemische zusammen mit unlöslichen Verbindungen der Erdalkalien ausgefällt werden.

25. Verfahren nach mindestens einem der Ansprüche 17 bis 21, dadurch gekennzeichnet, daß ein Katalysator verwendet wird, der erhalten wird, indem man ein übliches Trägermaterial aus Aluminiumoxid, keramischen Massen oder Blähton oder ihren Gemischen in Wasser suspendiert, eine Lösung aus Salzen des Scandiums, Yttriums, der Elemente der Lanthanidenreihe, der Elemente der Actinidenreihe oder ihre Gemische zugibt, eine Lösung aus löslichen Verbindungen des Aluminiums, der Metalloxide und gegebenenfalls von Erdalkalien zugibt und durch Versetzen mit wasserlöslichen Hydroxiden, Carbonaten, Sulfaten oder Phosphaten unlösliche Verbindungen des Scandiums, Yttriums, der Elemente der Lanthanidenreihe, der Elemente der Actinidenreihe oder ihre Gemische, des Aluminiums, der Metalloxide und gegebenenfalls der Erdalkalien auf dem Träger ausfällt, den Katalysator aus der

Lösung in an sich bekannter Weise abtrennt und bei einer Temperatur im Bereich von 100 bis 1000°C trocknet bzw. sintert.

26. Verfahren nach Anspruch 17 bis 21, dadurch gekennzeichnet, daß ein Katalysator verwendet wird, der erhalten wird, indem das Trägermaterial mit Lösungen thermisch instabiler Salze des Scandiums, Yttriums, der Elemente der Lanthanidenreihe, der Elemente der Actinidenreihe oder deren Gemische, wie mit den Nitraten, Acetaten und/oder Formiaten, imprägniert wird und daß anschließend die Salze durch Erhitzen zersetzt werden.

27. Verfahren nach mindestens einem der Ansprüche 17 bis 21, dadurch gekennzeichnet, daß ein Katalysator verwendet wird, der erhalten wird, indem man das Trägermaterial, wie Aluminiumoxid, Aluminiumsilicat, Metalloxid und/oder ihre Gemische, in Wasser suspendiert, eine Lösung oder Suspension aus Salzen des Scandiums, Yttriums, der Elemente der Lanthanidenreihe, der Elemente der Actinidenreihe oder ihre Gemische zugibt, gegebenenfalls eine Lösung oder Suspension von Aluminium-, Kobalt-, Moybdän- und Titanverbindungen oder von Gemischen dieser Verbindungen zugibt, gegebenenfalls eine Lösung oder Suspension von Erdalkaliverbindungen zugibt, das Lösungsmittel in an sich bekannter Weise entfernt und den Katalysator auf einer Temperatur im Bereich von 100 bis 1000°C trocknet bzw. sintert.

28. Verfahren nach mindestens einem der Ansprüche 17 bis 21, dadurch gekennzeichnet, daß die über die Katalysatorschüttung geführten Gasströme mit Wasser dem Sättigungsdampfdruck von 10 bis 100°C entsprechend befeuchtet werden.

29. Verfahren nach mindestens einem der Ansprüche 17 bis 28, dadurch gekennzeichnet, daß als reduzierende Verbindungen Schwefelkohlenstoff, Kohlenoxisulfid, Schwefelwasserstoff oder deren Gemische verwendet werden.

30. Verfahren nach mindestens einem der Ansprüche 17 bis 28, dadurch gekennzeichnet, daß als reduzierende Verbindungen Kohlenstoff-Sauerstoff-Verbindungen verwendet werden.

31. Verfahren nach Anspruch 30, dadurch gekennzeichnet, daß als Kohlenstoff-Sauerstoff-Verbindungen Formaldehyd, Methanol, Ameisensäure, Ameisensäuremethylester oder ihre Gemische verwendet werden.

32. Verfahren nach mindestens einem der Ansprüche 17 bis 31, dadurch gekennzeichnet, daß die Katalysatorkörper als Schüttung oder Packung ruhend oder sich bewegend in einem Kontaktraum angebracht werden.

33. Verfahren nach mindestens einem der Ansprüche 17 bis 31, dadurch gekennzeichnet, daß die Katalysatorschüttung unterteilt und der in jedem Teil der Schüttung erzeugte Schwefel gesammelt und aus der Kolonne ausgetragen wird.

34. Verfahren nach mindestens einem der Ansprüche 17 bis 33, dadurch gekennzeichnet, daß der den Katalysator verlassende Gasstrom mit flüssigem Schwefel gewaschen wird.